# FASCICULE DE BREVET EUROPEEN

(11) **EP 3 830 306 B1**
(45) Date de publication et mention de la délivrance du brevet: **07.09.2022**
(21) Numéro de dépôt: 19790631.6
(22) Date de dépôt: 24.07.2019
(51) Int. Cl.: C22C 19/05

(54) **SUPERALLIAGE A BASE DE NICKEL POUR FABRICATION D'UNE PIECE PAR MISE EN FORME DE POUDRE**
NICKELBASIERTE SUPERLEGIERUNG ZUR PULVERMETALLURGISCHEN PRODUKTION EINES TEILS
NICKEL BASED SUPERALLOY FOR POWDERMETALLURGICAL PRODUCED MEMBER

(30) Priorité: 31.07.2018 FR 1857130
(43) Date de publication de la demande: 09.06.2021
(73) Titulaire: SAFRAN, 75015 Paris (FR)
(72) Inventeur: RICHARD, Sébastien, Jean, 77550 MOISSY-CRAMAYEL (FR); RAME, Jérémy, 77550 MOISSY-CRAMAYEL (FR); MENOU, Edern, 77550 MOISSY-CRAMAYEL (FR)
(74) Mandataire: Cabinet Beau de Loménie
(86) Numéro de dépôt international: PCT/FR2019/051831
(87) Numéro de publication internationale: WO 2020/025880

(56) Documents cités:
- EP-A2- 2 071 128
- WO-A1-02/22901
- WO-A1-2017/021685
- WO-A1-2018/078269
- US-A- 5 523 170

## Description

### Arrière-plan de l'invention

La présente invention se rapporte au domaine général des superalliages à base de nickel pour des turbomachines, notamment pour les aubes fixes, aussi appelées distributeurs ou redresseurs, les aubes mobiles, ou encore les segments d'anneau.

Les superalliages à base de nickel sont généralement utilisés pour les parties chaudes des turbomachines, c'est-à-dire les parties des turbomachines situées en aval de la chambre de combustion.

Les superalliages à base de nickel ont pour principaux avantages de combiner à la fois une résistance au fluage élevée aux hautes températures comprises entre 650°C et 1200°C, ainsi qu'une résistance à l'oxydation et à la corrosion.

La tenue aux hautes températures est principalement due à la microstructure de ces matériaux, qui est composée d'une matrice γ-Ni de structure cristalline cubique à face centrée (CFC) et de précipités durcissants ordonnés γ'-Ni₃Al de structure L12.

Une pièce en superalliage à base de nickel est généralement fabriquée par fonderie, la microstructure de la pièce étant obtenue par un contrôle rigoureux des paramètres du procédé de fonderie, ainsi que par des traitements thermiques appliqués successivement sur la pièce.

Récemment, des procédés de fabrication par mise en forme de poudre ont été utilisés pour la fabrication de pièces en superalliage à base de nickel. Par des procédés de mise en forme de poudre on comprend ici les procédés de fabrication par frittage (également appelé procédé de métallurgie des poudres), ou bien le moulage par injection de métal (ou procédé MIM pour « *Metal Injection Molding* » selon la terminologie anglo-saxonne), ou bien encore les procédés de fabrication additive, comme par exemple un procédé de projection de liant (« *Binder Jetting »* selon la terminologie anglo-saxonne), ou encore par exemple un procédé de dépôt de matière fondue (ou encore procédé FFF pour *« Fused Filament Fabrication* » selon la terminologie anglo-saxonne).

Cependant, les caractéristiques mécaniques des pièces en superalliage obtenues par mise en forme de poudre peuvent être inférieures aux caractéristiques mécaniques des pièces en superalliage obtenues par fonderie.

Une telle diminution des caractéristiques mécaniques des pièces réalisées par mise en forme de poudre est due au fait que les domaines de température utilisés dans les procédés de fabrication par mise en forme de poudre, ainsi que les vitesses de chauffage et de refroidissement, sont très différents de ceux des procédés de fabrication par fonderie, ce qui ne permet pas à une pièce réalisée par mise en forme de poudre de disposer de la même microstructure qu'une pièce fabriquée par fonderie, alors que ces deux pièces possèdent une même composition.

On connait le superalliage Rene^{®}77 qui est un superalliage à base de nickel qui est couramment utilisé pour la fabrication par fonderie de pièces de turbomachine, notamment des aubes de turbine.

Par exemple, une pièce en Rene^{®}77 fabriquée par un procédé de moulage par injection de métal (procédé MIM) possède une microstructure avec des grains de plus faible taille qu'une pièce fabriquée par fonderie, limitant ainsi la résistance au fluage de la pièce fabriquée par le procédé MIM.

En effet, le frittage de ce superalliage réalisé durant le procédé MIM se fait dans un domaine de température où précipitent des carbures de titane (entre 1200°C et 1300°C), qui après refroidissement limitent fortement le mouvement des joints de grain par épinglage Zener (*« Zener pinning »* selon la terminologie anglo-saxonne), et ainsi limite la génération d'une microstructure à gros grains.

On connait le document WO 02/22901 qui décrit un superalliage à base de nickel.

### Objet et résumé de l'invention

La présente invention a donc pour but de proposer des compositions de superalliages à base de nickel qui sont adaptées pour la fabrication d'une pièce par mise en forme d'une poudre de superalliage à base de nickel, de manière à améliorer les caractéristiques mécaniques de la pièce, et notamment la résistance au fluage.

L'invention a notamment pour but de maintenir la stabilité microstructurale dans le volume du superalliage en assurant une faible sensibilité à la formation de phases topologiquement compactes PTC (les phases µ ou σ riches en chrome, molybdène et tungstène).

L'invention vise également à donner au superalliage une teneur en phase γ' qui est similaire aux superalliages de l'état de la technique utilisés pour la fonderie.

L'invention a également pour but de fournir un alliage dont la masse volumique n'est pas trop importante.

Selon un premier aspect, l'invention propose un superalliage à base de nickel comprenant, en pourcentages massiques :
- 5 à 6,5% d'aluminium,
- 4,5 à 7% de cobalt,
- 14,5 à 16,5% de chrome,
- 0 à 0,2% de hafnium,
- 0 à 1,5% de molybdène,
- 2 à 3,5% de tantale,
- 0 à 2% de titane,
- 1 à 2,5% de tungstène,
- 0 à 0,08% de zirconium,
- 0 à 0,03% de bore,
- 0 à 0,07% de carbone,
le complément étant constitué de nickel et des impuretés inévitables.

On définit par alliage à base de nickel un alliage dont le pourcentage massique en nickel est majoritaire.

On définit les impuretés inévitables comme les éléments qui ne sont pas ajoutés de manière intentionnelle dans la composition et qui sont apportés avec d'autres éléments. Parmi les impuretés inévitables, on peut notamment citer le silicium (Si).

Le superalliage selon l'invention permet de fabriquer une pièce par mise en forme de poudre avec une microstructure qui est comparable à la microstructure d'une pièce fabriquée par fonderie avec les alliages conventionnels qui sont adaptés pour la fonderie.

Le superalliage selon l'invention permet notamment de limiter, voir d'éviter, lors du frittage, la formation de carbures, ou d'autres composés, qui tendent à limiter le mouvement des joints de grains, et ainsi limitent la taille des grains.

Selon une variante possible, le superalliage peut comprendre, en pourcentages massiques :
- 5 à 6,5% d'aluminium,
- 4,5 à 7% de cobalt,
- 14,5 à 16,5% de chrome,
- 0 à 0,2% de hafnium,
- 0 à 1,5% de molybdène,
- 2 à 3,5% de tantale,
- 0,5 à 2% de titane,
- 1 à 2,5% de tungstène,
- 0 à 0,08% de zirconium,
- 0 à 0,03% de bore,
- 0 à 0,07% de carbone,
le complément étant constitué de nickel et des impuretés inévitables.

Par ailleurs, le superalliage peut comprendre, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

Le superalliage peut également comprendre, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0,5 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

Selon une variante possible, le superalliage peut également comprendre, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 1 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

Le superalliage peut en outre comprendre, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

Selon une variante possible, le superalliage peut comprendre, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

Selon une autre variante possible, le superalliage peut comprendre, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

Selon une autre variante possible, le superalliage peut comprendre, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0,5 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

Selon une autre variante possible, le superalliage peut comprendre, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0,5 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

Selon une variante possible, le superalliage peut comprendre, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0,5 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

Selon une variante possible, le superalliage peut comprendre, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 1 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

Selon un deuxième aspect, l'invention propose une pièce de turbomachine en superalliage à base de nickel selon l'une quelconque des caractéristiques précédentes.

La pièce peut être un élément d'une turbine de turbomachine d'aéronef, par exemple une turbine haute-pression ou une turbine basse-pression, ou bien un élément de compresseur, et notamment de compresseur haute pression.

Selon une caractéristique additionnelle, la pièce de turbine ou de compresseur peut être une aube, ladite aube pouvant être une aube mobile ou une aube fixe, ou bien un secteur d'anneau.

Selon un troisième aspect, l'invention propose un procédé de fabrication d'une pièce de turbomachine comprend les étapes suivantes :
- fabrication d'une poudre en superalliage à base de nickel selon l'une quelconques des caractéristiques précédentes ;
- réalisation de la pièce par mise en forme de la poudre.

Le procédé de mise en forme de la poudre de superalliage à base de nickel peut être mis en œuvre par frittage de ladite poudre, ou bien par fabrication additive à partir de ladite poudre, ou bien par moulage par injection de métal (procédé MIM) à partir de ladite poudre.

Selon une caractéristique additionnelle, le procédé comprend une étape de traitement thermique de remise en solution qui est suivie par une étape de traitement thermique de précipitation d'une phase γ'.

### Brève description des dessins

D'autres caractéristiques et avantages de la présente invention ressortiront de la description faite ci-dessous, en référence au dessin annexé qui en illustrent un exemple de réalisation dépourvu de tout caractère limitatif.

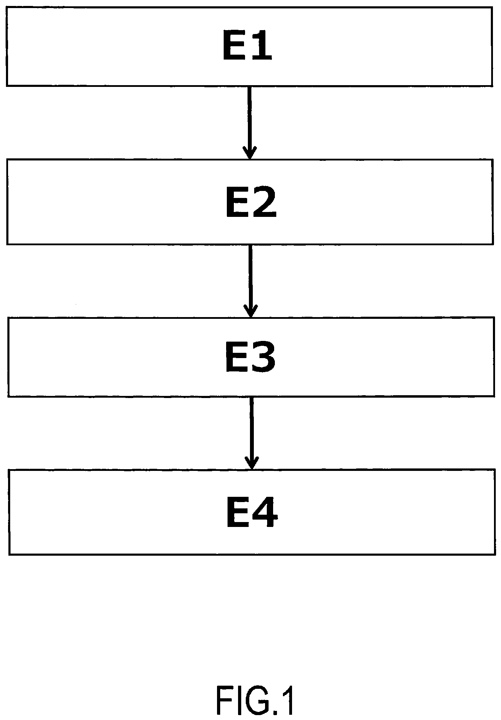

La figure 1 représente schématiquement les étapes d'un procédé de fabrication d'une pièce de turbomachine selon une variante possible de l'invention.

### Description détaillée de l'invention

Le superalliage selon l'invention comprend une base de nickel à laquelle sont associés des éléments d'addition majeurs.

Les éléments d'addition majeurs comprennent : le cobalt Co, le chrome Cr, le molybdène Mo, le tungstène W, l'aluminium Al, et le tantale Ta. Les éléments d'addition majeurs peuvent également comprendre le titane Ti.

Le superalliage peut également comprendre des éléments d'addition mineurs, qui sont des éléments d'addition dont le pourcentage maximum dans l'alliage ne dépasse pas 1% en pourcentage massique.

Les éléments d'addition mineurs comprennent : le hafnium Hf, le carbone C, le bore B, et le zirconium Zr.

Le superalliage à base de nickel comprend, en pourcentages massiques, 5 à 6,5% d'aluminium, 4,5 à 7% de cobalt, 14,5 à 16,5% de chrome, 0 à 0,2% de hafnium, 0 à 1,5% de molybdène, 2 à 3,5% de tantale, 0 à 2% de titane, 1 à 2,5% de tungstène, 0 à 0,08% de zirconium, 0 à 0,03% de bore, 0 à 0,07% de carbone, le complément étant constitué de nickel et des impuretés inévitables.

Une telle composition de superalliage permet d'améliorer les propriétés de tenue mécaniques à haute température des pièces fabriquées par mise en forme d'une poudre constituée dudit superalliage.

Une telle amélioration des propriétés mécaniques est obtenue par réalisation d'une microstructure au sein de la pièce en superalliage fabriquée par mise en forme de poudre qui tend à ressembler à la microstructure des pièces en superalliage de l'état de la technique qui sont réalisées par fonderie.

Le superalliage selon l'invention est adapté aux températures mises en œuvre durant la fabrication par mise en forme de poudre qui sont plus faibles que les températures mises en œuvre lors des procédés de fonderie.

Le tungstène, le chrome, le cobalt participent principalement au durcissement de la matrice austénitique de structure cristalline cubique à face centrée (CFC), également appelée matrice y (gamma). Ce durcissement est obtenu par substitution du nickel par le tungstène, le chrome et le cobalt.

De plus, de manière préférentielle, le superalliage peut comprendre du molybdène, le molybdène participant également principalement au durcissement de la matrice y en se substituant au nickel.

L'aluminium et le tantale favorisent la précipitation de la phase durcissante Ni₃ (Al, Ta) de structure cubique ordonnée L12, également appelée phase γ' (gamma').

De plus, de manière préférentielle, le superalliage peut comprendre du titane, le titane favorisant également la précipitation de la phase durcissante Ni₃ (Al, Ta, Ti), la phase γ'.

Par ailleurs, les éléments réfractaires que sont le molybdène, le tungstène et le tantale permettent également de ralentir les mécanismes contrôlés par la diffusion, améliorant ainsi la résistance au fluage et à l'oxydation du superalliage.

En outre, le chrome et l'aluminium permettent d'améliorer la résistance à l'oxydation et à la corrosion à haute température du super alliage, notamment aux environs des 900°C pour la corrosion, et aux environs des 1100°C pour l'oxydation.

L'addition de chrome et de cobalt permet également de diminuer la température de solvus γ' du superalliage.

De plus, le cobalt permet de renforcer la matrice y, ainsi que de réduire la sensibilité à la précipitation de phases topologiquement compactes PTC et à la formation de zones de réactions secondaires ZRS. Toutefois, le cobalt tend à diminuer la température de solvus γ'.

De manière avantageuse, le superalliage peut également comprendre du hafnium afin d'améliorer la tenue à l'oxydation à chaud en augmentant l'adhérence de la couche d'alumine Al₂O₃ qui se forme à la du superalliage à haute température en milieu oxydant.

De plus, l'ajout de carbone, de bore et de zirconium permet de renforcer la résistance des joints de grains, améliorant ainsi la résistance à corrosion de la pièce fabriquée avec le superalliage.

De manière préférentielle, le superalliage à base de nickel comprend, en pourcentages massiques, 5 à 6,5% d'aluminium, 4,5 à 7% de cobalt, 14,5 à 16,5% de chrome, 0 à 0,2% de hafnium, 0 à 1,5% de molybdène, 2 à 3,5% de tantale, 0,5 à 2% de titane, 1 à 2,5% de tungstène, 0 à 0,08% de zirconium, 0 à 0,03% de bore, 0 à 0,07% de carbone, le complément étant constitué de nickel et des impuretés inévitables.

Un taux de titane compris entre 0,5 et 2%, en pourcentages massiques, permet d'améliorer la résistance au fluage.

Le superalliage à base de nickel peut également comprendre, en pourcentages massiques, 5,6 à 6% d'aluminium, 5,2 à 6,2% de cobalt, 15,4 à 16% de chrome, 0 à 0,15% de hafnium, 0,5 à 0,9% de molybdène, 2,5 à 2,9% de tantale, 0 à 1,5% de titane, 1,6 à 2% de tungstène, 0 à 0,08% de zirconium, 0 à 0,03% de bore, 0 à 0,07% de carbone, le complément étant constitué de nickel et des impuretés inévitables.

De manière préférentielle, le superalliage comprend, en pourcentages massiques, 5,6 à 6% d'aluminium, 5,2 à 6,2% de cobalt, 15,4 à 16% de chrome, 0 à 0,15% de hafnium, 0,5 à 0,9% de molybdène, 2,5 à 2,9% de tantale, 0,5 à 1,5% de titane, 1,6 à 2% de tungstène, 0 à 0,08% de zirconium, 0 à 0,03% de bore, 0 à 0,07% de carbone, le complément étant constitué de nickel et des impuretés inévitables.

Un taux de titane compris entre 0,5 et 1,5%, en pourcentages massiques, permet d'améliorer encore plus la résistance au fluage.

De manière encore plus préférentielle, le superalliage comprend, en pourcentages massiques, 5,6 à 6% d'aluminium, 5,2 à 6,2% de cobalt, 15,4 à 16% de chrome, 0 à 0,15% de hafnium, 0,5 à 0,9% de molybdène, 2,5 à 2,9% de tantale, 1 à 1,5% de titane, 1,6 à 2% de tungstène, 0 à 0,08% de zirconium, 0 à 0,03% de bore, 0 à 0,07% de carbone, le complément étant constitué de nickel et des impuretés inévitables.

Un taux de titane compris entre 1 et 1,5%, en pourcentages massiques, permet d'améliorer encore plus la résistance au fluage.

Le super alliage peut également comprendre, en pourcentages massiques, 5,6 à 6% d'aluminium, 5,2 à 6,2% de cobalt, 15,4 à 16% de chrome, 0 à 0,15% de hafnium, 0,5 à 0,9% de molybdène, 2,5 à 2,9% de tantale, 0 à 1,5% de titane, 1,6 à 2% de tungstène, 0,04 à 0,08% de zirconium, 0 à 0,03% de bore, 0 à 0,07% de carbone, le complément étant constitué de nickel et des impuretés inévitables.

Un taux de 0,04 à 0,08% de zirconium, et des taux maximums de 0,03% de bore et de 0,07% de carbone, en pourcentages massiques, permet d'améliorer la résistance à la corrosion.

Le superalliage peut également comprendre, en pourcentages massiques, 5,6 à 6% d'aluminium, 5,2 à 6,2% de cobalt, 15,4 à 16% de chrome, 0,1 à 0,15% de hafnium, 0,5 à 0,9% de molybdène, 2,5 à 2,9% de tantale, 0 à 1,5% de titane, 1,6 à 2% de tungstène, 0 à 0,08% de zirconium, 0 à 0,03% de bore, 0 à 0,07% de carbone, le complément étant constitué de nickel et des impuretés inévitables.

Un taux de hafnium compris entre 0,1 à 0,15% de hafnium permet d'améliorer les caractéristiques mécaniques du superalliage.

De manière préférentielle, le superalliage comprend, en pourcentages massiques, 5,6 à 6% d'aluminium, 5,2 à 6,2% de cobalt, 15,4 à 16% de chrome, 0,1 à 0,15% de hafnium, 0,5 à 0,9% de molybdène, 2,5 à 2,9% de tantale, 0 à 1,5% de titane, 1,6 à 2% de tungstène, 0,04 à 0,08% de zirconium, 0 à 0,03% de bore, 0 à 0,07% de carbone, le complément étant constitué de nickel et des impuretés inévitables.

Le superalliage peut également comprendre, en pourcentages massiques, 5,6 à 6% d'aluminium, 5,2 à 6,2% de cobalt, 15,4 à 16% de chrome, 0,1 à 0,15% de hafnium, 0,5 à 0,9% de molybdène, 2,5 à 2,9% de tantale, 0,5 à 1,5% de titane, 1,6 à 2% de tungstène, 0 à 0,08% de zirconium, 0 à 0,03% de bore, 0 à 0,07% de carbone, le complément étant constitué de nickel et des impuretés inévitables.

Le superalliage peut également comprendre, en pourcentages massiques, 5,6 à 6% d'aluminium, 5,2 à 6,2% de cobalt, 15,4 à 16% de chrome, 0 à 0,15% de hafnium, 0,5 à 0,9% de molybdène, 2,5 à 2,9% de tantale, 0,5 à 1,5% de titane, 1,6 à 2% de tungstène, 0,04 à 0,08% de zirconium, 0 à 0,03% de bore, 0 à 0,07% de carbone, le complément étant constitué de nickel et des impuretés inévitables.

De manière préférentielle, le superalliage comprend, en pourcentages massiques, 5,6 à 6% d'aluminium, 5,2 à 6,2% de cobalt, 15,4 à 16% de chrome, 0,1 à 0,15% de hafnium, 0,5 à 0,9% de molybdène, 2,5 à 2,9% de tantale, 0,5 à 1,5% de titane, 1,6 à 2% de tungstène, 0,04 à 0,08% de zirconium, 0 à 0,03% de bore, 0 à 0,07% de carbone, le complément étant constitué de nickel et des impuretés inévitables.

De manière encore plus préférentielle, le superalliage comprend, en pourcentages massiques, 5,6 à 6% d'aluminium, 5,2 à 6,2% de cobalt, 15,4 à 16% de chrome, 0,1 à 0,15% de hafnium, 0,5 à 0,9% de molybdène, 2,5 à 2,9% de tantale, 1 à 1,5% de titane, 1,6 à 2% de tungstène, 0,04 à 0,08% de zirconium, 0 à 0,03% de bore, 0 à 0,07% de carbone, le complément étant constitué de nickel et des impuretés inévitables.

Le superalliage permet de fabriquer des pièces de turbomachine qui possèdent une bonne tenue mécanique aux hautes températures.

Comme illustré sur la figure 1, le procédé de fabrication d'une pièce de turbomachine comprend les étapes suivantes :
- E1 : fabrication d'une poudre en superalliage à base de nickel tel que décrit précédemment ;
- E2 : réalisation de la pièce par mise en forme de la poudre.

L'étape E1 de fabrication de la poudre en superalliage de nickel est réalisée par atomisation d'une masse fondue préparée au préalable de manière à avoir la composition désirée. L'atomisation peut être réalisée avec un gaz inerte, tel que par exemple du diazote, de l'hélium ou de l'argon.

L'étape E2 de réalisation de la pièce par mise en forme de la poudre obtenue lors de l'étape E1 peut être réalisée par frittage (également appelé procédé de métallurgie des poudres) ou par fabrication additive, ou bien encore par moulage par injection de métal (procédé MIM).

La fabrication par frittage de la poudre est réalisée en remplissant un moule afin de donner à la poudre la forme de la pièce à réaliser, puis en comprimant la poudre et en la chauffant afin de lier les grains de la poudre par diffusion. La cohésion de la pièce est obtenue par le phénomène de diffusion, sans fusion de la poudre. La température de frittage peut être comprise entre 1220°C et 1320°C

La fabrication additive à partir de la poudre de superalliage peut être réalisé par projection de liant (« Binder Jetting » selon la terminologie anglo-saxonne). Pour ce faire une fine couche de poudre est déposée sur un plateau. Un liant est ensuite projeté sur la couche de poudre suivant la forme de la pièce à fabriquer, afin de lier entre eux différents grains de la poudre et ainsi fabriquer une première portion élémentaire de la pièce. Une fois la première portion élémentaire de la pièce fabriquée, le plateau est descendu et une nouvelle couche de poudre est déposée par-dessus la première portion élémentaire de la pièce fabriquée. Là encore, une fois la couche de poudre déposée, le liant est projeté de manière à fabriquer une deuxième portion élémentaire de la pièce. Ces opérations sont ensuite répétées afin de réaliser l'intégralité de la pièce. Le liant peut ensuite être éliminé, et la pièce peut être frittée, par exemple à une température comprise entre 1220°C et 1320°C.

Selon une autre variante possible, la fabrication additive de la pièce peut être réalisée par un procédé de dépôt de matière fondue (ou encore procédé FFF pour *«Fused Filament Fabrication»* selon la terminologie anglo-saxonne). Pour ce faire, la poudre de superalliage est mélangée avec un liant plastique, puis est mis en forme afin de former un filament. Le filament formé par le mélange du métal et du liant plastique est ensuite fondu de manière contrôlée et la matière fondue est déposée de manière à donner sa forme à la pièce à fabriquer. Une fois la pièce formée par dépôt de matière à partir du filament, le liant plastique est éliminé, par exemple par chauffage, afin d'obtenir une pièce composée uniquement du superalliage. Une fois le liant plastique éliminé, la pièce est frittée, la température de frittage pouvant être comprise entre 1220°C et 1320°C.

Selon encore une autre variante possible, la fabrication additive de la pièce est réalisée par fusion sélective par laser (ou procédé SLM, pour « Selective Laser Melting » selon la terminologie anglo-saxonne). Pour ce faire, une fine couche de poudre de superalliage est déposée sur un plateau. Un faisceau laser vient ensuite faire fondre sélectivement la poudre afin de former une première portion élémentaire de la pièce, l'atmosphère étant contrôlée afin de ne pas polluer le superalliage. Une fois la première portion élémentaire fabriquée, le plateau est abaissé et une nouvelle couche de poudre est déposée par-dessus la première portion élémentaire de la pièce, cette nouvelle couche de poudre étant ensuite fondue sélectivement par le laser afin de fabriquer une deuxième portion élémentaire de la pièce. Ces opérations sont ensuite répétées afin de réaliser l'intégralité de la pièce.

Selon encore une autre variante possible, la fabrication additive de la pièce est réalisée par fusion par faisceau d'électron (ou procédé EBM pour « Electron Beam Melting » selon la terminologie anglo-saxonne), qui est un procédé similaire à la fusion sélective par laser, la poudre étant fondue par un faisceau par électron à la place du laser, la poudre étant sous vide.

L'étape E2 de réalisation de la pièce par mise en forme de la poudre peut être effectué par moulage par injection de métal (appelé également procédé MIM pour « Metal Injection Molding » selon la terminologie anglo-saxonne). Pour ce faire, la poudre de superalliage est mélangée avec un liant plastique. Ensuite, le mélange est injecté afin de donner sa forme à la pièce. Une fois mise en forme, le liant est éliminé, par exemple par chauffage, de sorte à obtenir une pièce uniquement composée du superalliage à base de nickel. Une fois le liant plastique éliminé, la pièce est frittée, la température de frittage étant par exemple comprise entre 1220°C et 1320°C.

Par ailleurs, comme illustré sur la figure 1, le procédé de fabrication peut comprendre une étape E3 de traitement thermique de mise en solution qui est suivie par une étape E4 de traitement thermique de précipitation de la phase γ'.

L'étape E3 de traitement thermique de remise en solution est réalisée en chauffant la pièce à une température et pendant une durée qui sont adaptées pour provoquer la dissolution des précipités γ' qui ont été formés durant la fabrication de la pièce. La température du traitement thermique de remise en solution est inférieure à la température de solidus afin d'éviter toute fusion locale de la matrice y.

L'étape E3 de traitement thermique de remise en solution peut être réalisée en chauffant la pièce à une température comprise entre 1100°C et 1300°C, typiquement 1200°C, pendant une durée comprise entre 1h et 5h, typiquement 3h.

Par ailleurs, cette étape E3 de traitement thermique de remise en solution permet de faire grossir les grains de la microstructure de la pièce.

L'étape E4 de traitement thermique de précipitation de la phase γ' est réalisée par un ou plusieurs revenus qui permettent la reprécipitation de la phase γ' sous la forme désirée.

L'étape E4 de traitement thermique de précipitation de la phase γ' peut par exemple être réalisée par un premier revenu à une température comprise entre 800°C et 900°C, typiquement 850°C, qui est suivi par un deuxième revenu à une température comprise entre 700°C et 800°C, typiquement 750°C. Le premier revenu permet de provoquer la précipitation de gros précipités de phase γ', et le deuxième revenu permet de provoquer la précipitation de précipités de phase γ' de tailles plus fines.

Les pièces fabriquées peuvent avoir une structure cristalline équiaxe, c'est-à-dire que la taille des grains de la structure cristalline est sensiblement équivalente dans toutes les directions. Cette structure équiaxe est obtenue par le frittage de la poudre, le frittage n'orientant pas les grains.

Toutefois, l'invention n'est pas limitée à la fabrication de pièces avec une structure cristalline équiaxe. Par exemple, l'utilisation de la variante de fabrication de la pièce par fusion sélective par laser (précédé SLM), ou de la fusion par faisceau d'électron (procédé EDM) peut permettre de fabriquer des pièces dont les grains sont orientés.

Le superalliage selon l'invention est adapté pour la fabrication d'aubes pour une turbomachine. Les aubes peuvent être des aubes de compresseur, et préférentiellement d'un compresseur haute pression qui possède une température de travail plus élevée qu'un compresseur basse pression, ou bien les aubes peuvent être des aubes de turbine.

## Revendications

1. Superalliage à base nickel comprenant, en pourcentages massiques :
- 5 à 6,5% d'aluminium,
- 4,5 à 7% de cobalt,
- 14,5 à 16,5% de chrome,
- 0 à 0,2% de hafnium,
- 0 à 1,5% de molybdène,
- 2 à 3,5% de tantale,
- 0 à 2% de titane,
- 1 à 2,5% de tungstène,
- 0 à 0,08% de zirconium,
- 0 à 0,03% de bore,
- 0 à 0,07% de carbone,
le complément étant constitué de nickel et des impuretés inévitables.

2. Superalliage selon la revendication 1, dans lequel ledit superalliage comprend, en pourcentages massiques :
- 5 à 6,5% d'aluminium,
- 4,5 à 7% de cobalt,
- 14,5 à 16,5% de chrome,
- 0 à 0,2% de hafnium,
- 0 à 1,5% de molybdène,
- 2 à 3,5% de tantale,
- 0,5 à 2% de titane,
- 1 à 2,5% de tungstène,
- 0 à 0,08% de zirconium,
- 0 à 0,03% de bore,
- 0 à 0,07% de carbone,
le complément étant constitué de nickel et des impuretés inévitables.

3. Superalliage selon la revendication 1, dans lequel ledit superalliage comprend, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

4. Superalliage selon la revendication 3, dans lequel ledit superalliage comprend, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0,5 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

5. Superalliage selon la revendication 4, dans lequel ledit superalliage comprend, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 1 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

6. Superalliage selon la revendication 3, dans lequel ledit superalliage comprend, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

7. Superalliage selon la revendication 3, dans lequel ledit superalliage comprend, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

8. Superalliage selon les revendications 6 et 7, dans lequel ledit superalliage comprend, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

9. Superalliage selon les revendications 4 et 7, dans lequel ledit superalliage comprend, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0,5 à 1,5% de titane,
- 1,6 à 2% de tungstène,
- 0 à 0,08% de zirconium,
- 0 à 0,03% de bore,
- 0 à 0,07% de carbone,
le complément étant constitué de nickel et des impuretés inévitables.

10. Superalliage selon les revendications 4 et 6, dans lequel ledit superalliage comprend, en pourcentages massiques :
- 5,6 à 6% d'aluminium,
- 5,2 à 6,2% de cobalt,
- 15,4 à 16% de chrome,
- 0 à 0,15% de hafnium,
- 0,5 à 0,9% de molybdène,
- 2,5 à 2,9% de tantale,
- 0,5 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

11. Superalliage selon l'une quelconque des revendications 6 à 10, dans lequel ledit superalliage comprend, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 0,5 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

12. Superalliage selon la revendication 11, dans lequel ledit superalliage comprend, en pourcentages massiques :
- 5,6 à 6% d'aluminium,
- 5,2 à 6,2% de cobalt,
- 15,4 à 16% de chrome,
- 0,1 à 0,15% de hafnium,
- 0,5 à 0,9% de molybdène,
- 2,5 à 2,9% de tantale,
- 1 à 1,5% de titane,
- 1,6 à 2% de tungstène,
- 0,04 à 0,08% de zirconium,
- 0 à 0,03% de bore,
- 0 à 0,07% de carbone,
le complément étant constitué de nickel et des impuretés inévitables.

13. Pièce de turbomachine en super alliage à base de nickel selon l'une quelconque des revendications 1 à 12.

14. Procédé de fabrication d'une pièce de turbomachine comprenant les étapes suivantes :
- (E1) : fabrication d'une poudre en superalliage à base de nickel selon l'une quelconques des revendications 1 à 12 ;
- (E2) : réalisation de la pièce par mise en forme de la poudre.

15. Procédé selon la revendication 14, dans lequel ledit procédé comprend une étape (E3) de traitement thermique de remise en solution qui est suivie par une étape (E4) de traitement thermique de précipitation d'une phase γ'.

## Patentansprüche

1. Nickelbasierte Superlegierung, die, in Masseprozent, umfasst:
- 5 bis 6,5 % Aluminium,
- 4,5 bis 7 % Kobalt,
- 14,5 bis 16,5 % Chrom,
- 0 bis 0,2 % Hafnium,
- 0 bis 1,5 % Molybdän,
- 2 bis 3,5 % Tantal,
- 0 bis 2 % Titan,
- 1 bis 2,5 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

2. Superlegierung nach Anspruch 1, wobei die Superlegierung, in Masseprozent, umfasst:
- 5 bis 6,5 % Aluminium,
- 4,5 bis 7 % Kobalt,
- 14,5 bis 16,5 % Chrom,
- 0 bis 0,2 % Hafnium,
- 0 bis 1,5 % Molybdän,
- 2 bis 3,5 % Tantal,
- 0,5 bis 2 % Titan,
- 1 bis 2,5 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

3. Superlegierung nach Anspruch 1, wobei die Superlegierung, in Masseprozent, umfasst:
- 5,6 bis 6 % Aluminium,
- 5,2 bis 6,2 % Kobalt,
- 15,4 bis 16 % Chrom,
- 0 bis 0,15 % Hafnium,
- 0,5 bis 0,9 % Molybdän,
- 2,5 bis 2,9 % Tantal,
- 0 bis 1,5 % Titan,
- 1,6 bis 2 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

4. Superlegierung nach Anspruch 3, wobei die Superlegierung, in Masseprozent, umfasst:
- 5,6 bis 6 % Aluminium,
- 5,2 bis 6,2 % Kobalt,
- 15,4 bis 16 % Chrom,
- 0 bis 0,15 % Hafnium,
- 0,5 bis 0,9 % Molybdän,
- 2,5 bis 2,9 % Tantal,
- 0,5 bis 1,5 % Titan,
- 1,6 bis 2 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

5. Superlegierung nach Anspruch 4, wobei die Superlegierung, in Masseprozent, umfasst:
- 5,6 bis 6 % Aluminium,
- 5,2 bis 6,2 % Kobalt,
- 15,4 bis 16 % Chrom,
- 0 bis 0,15 % Hafnium,
- 0,5 bis 0,9 % Molybdän,
- 2,5 bis 2,9 % Tantal,
- 1 bis 1,5 % Titan,
- 1,6 bis 2 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

6. Superlegierung nach Anspruch 3, wobei die Superlegierung, in Masseprozent, umfasst:
- 5,6 bis 6 % Aluminium,
- 5,2 bis 6,2 % Kobalt,
- 15,4 bis 16 % Chrom,
- 0 bis 0,15 % Hafnium,
- 0,5 bis 0,9 % Molybdän,
- 2,5 bis 2,9 % Tantal,
- 0 bis 1,5 % Titan,
- 1,6 bis 2 % Wolfram,
- 0,04 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

7. Superlegierung nach Anspruch 3, wobei die Superlegierung, in Masseprozent, umfasst:
- 5,6 bis 6 % Aluminium,
- 5,2 bis 6,2 % Kobalt,
- 15,4 bis 16 % Chrom,
- 0,1 bis 0,15 % Hafnium,
- 0,5 bis 0,9 % Molybdän,
- 2,5 bis 2,9 % Tantal,
- 0 bis 1,5 % Titan,
- 1,6 bis 2 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

8. Superlegierung nach Anspruch 6 und 7, wobei die Superlegierung, in Masseprozent, umfasst:
- 5,6 bis 6 % Aluminium,
- 5,2 bis 6,2 % Kobalt,
- 15,4 bis 16 % Chrom,
- 0,1 bis 0,15 % Hafnium,
- 0,5 bis 0,9 % Molybdän,
- 2,5 bis 2,9 % Tantal,
- 0 bis 1,5 % Titan,
- 1,6 bis 2 % Wolfram,
- 0,04 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

9. Superlegierung nach Anspruch 4 und 7, wobei die Superlegierung, in Masseprozent, umfasst:
- 5,6 bis 6 % Aluminium,
- 5,2 bis 6,2 % Kobalt,
- 15,4 bis 16 % Chrom,
- 0,1 bis 0,15 % Hafnium,
- 0,5 bis 0,9 % Molybdän,
- 2,5 bis 2,9 % Tantal,
- 0 bis 1,5 % Titan,
- 1,6 bis 2 % Wolfram,
- 0 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

10. Superlegierung nach Anspruch 4 und 6, wobei die Superlegierung, in Masseprozent, umfasst:
- 5,6 bis 6 % Aluminium,
- 5,2 bis 6,2 % Kobalt,
- 15,4 bis 16 % Chrom,
- 0 bis 0,15 % Hafnium,
- 0,5 bis 0,9 % Molybdän,
- 2,5 bis 2,9 % Tantal,
- 0,5 bis 1,5 % Titan,
- 1,6 bis 2 % Wolfram,
- 0,4 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

11. Superlegierung nach einem der Ansprüche 6 bis 10, wobei die Superlegierung, in Masseprozent, umfasst:
- 5,6 bis 6 % Aluminium,
- 5,2 bis 6,2 % Kobalt,
- 15,4 bis 16 % Chrom,
- 0,1 bis 0,15 % Hafnium,
- 0,5 bis 0,9 % Molybdän,
- 2,5 bis 2,9 % Tantal,
- 0,5 bis 1,5 % Titan,
- 1,6 bis 2 % Wolfram,
- 0,04 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

12. Superlegierung nach Anspruch 11, wobei die Superlegierung, in Masseprozent, umfasst:
- 5,6 bis 6 % Aluminium,
- 5,2 bis 6,2 % Kobalt,
- 15,4 bis 16 % Chrom,
- 0,1 bis 0,15 % Hafnium,
- 0,5 bis 0,9 % Molybdän,
- 2,5 bis 2,9 % Tantal,
- 0 bis 1,5 % Titan,
- 1,6 bis 2 % Wolfram,
- 0,04 bis 0,08 % Zirkonium,
- 0 bis 0,03 % Bor,
- 0 bis 0,07 % Kohlenstoff,
wobei der Rest aus Nickel und unvermeidlichen Verunreinigungen besteht.

13. Turbomaschinenteil aus nickelbasierter Superlegierung nach einem der Ansprüche 1 bis 12.

14. Verfahren zur Herstellung eines Turbomaschinenteils, das die folgenden Schritte umfasst:
- (E1): Herstellen eines Pulvers aus nickelbasierter Superlegierung nach einem der Ansprüche 1 bis 12;
- (E2): Ausführen des Teils durch Formgebung des Pulvers.

15. Verfahren nach Anspruch 14, wobei das Verfahren einen Schritt (E3) zur Wärmebehandlung durch Lösungsglühen umfasst, auf den ein Schritt (E4) zur Ausscheidungswärmebehandlung einer γ'-Phase folgt.

## Claims

1. A nickel-based superalloy comprising, in mass percentages:
- 5 to 6.5% aluminum,
- 4.5 to 7% cobalt,
- 14.5 to 16.5% chromium,
- 0 to 0.2% hafnium,
- 0 to 1.5% molybdenum,
- 2 to 3.5% tantalum,
- 0 to 2% titanium,
- 1 to 2.5% tungsten,
- 0 to 0.08% zirconium,
- 0 to 0.03% boron,
- 0 to 0.07% carbon,
the remainder consisting of nickel and unavoidable impurities.

2. The superalloy as claimed in claim 1, wherein said superalloy comprises, in mass percentages:
- 5 to 6.5% aluminum,
- 4.5 to 7% cobalt,
- 14.5 to 16.5% chromium,
- 0 to 0.2% hafnium,
- 0 to 1.5% molybdenum,
- 2 to 3.5% tantalum,
- 0.5 to 2% titanium,
- 1 to 2.5% tungsten,
- 0 to 0.08% zirconium,
- 0 to 0.03% boron,
- 0 to 0.07% carbon,
the remainder consisting of nickel and unavoidable impurities.

3. The superalloy as claimed in claim 1, wherein said superalloy comprises, in mass percentages:
- 5.6 to 6% aluminum,
- 5.2 to 6.2% cobalt,
- 15.4 to 16% chromium,
- 0 to 0.15% hafnium,
- 0.5 to 0.9% molybdenum,
- 2.5 to 2.9% tantalum,
- 0 to 1.5% titanium,
- 1.6 to 2% tungsten,
- 0 to 0.08% zirconium,
- 0 to 0.03% boron,
- 0 to 0.07% carbon,
the remainder consisting of nickel and unavoidable impurities.

4. The superalloy as claimed in claim 3, wherein said superalloy comprises, in mass percentages:
- 5.6 to 6% aluminum,
- 5.2 to 6.2% cobalt,
- 15.4 to 16% chromium,
- 0 to 0.15% hafnium,
- 0.5 to 0.9% molybdenum,
- 2.5 to 2.9% tantalum,
- 0.5 to 1.5% titanium,
- 1.6 to 2% tungsten,
- 0 to 0.08% zirconium,
- 0 to 0.03% boron,
- 0 to 0.07% carbon,
the remainder consisting of nickel and unavoidable impurities.

5. The superalloy as claimed in claim 4, wherein said superalloy comprises, in mass percentages:
- 5.6 to 6% aluminum,
- 5.2 to 6.2% cobalt,
- 15.4 to 16% chromium,
- 0 to 0.15% hafnium,
- 0.5 to 0.9% molybdenum,
- 2.5 to 2.9% tantalum,
- 1 to 1.5% titanium,
- 1.6 to 2% tungsten,
- 0 to 0.08% zirconium,
- 0 to 0.03% boron,
- 0 to 0.07% carbon,
the remainder consisting of nickel and unavoidable impurities.

6. The superalloy as claimed in claim 3, wherein said superalloy comprises, in mass percentages:
- 5.6 to 6% aluminum,
- 5.2 to 6.2% cobalt,
- 15.4 to 16% chromium,
- 0 to 0.15% hafnium,
- 0.5 to 0.9% molybdenum,
- 2.5 to 2.9% tantalum,
- 0 to 1.5% titanium,
- 1.6 to 2% tungsten,
- 0.04 to 0.08% zirconium,
- 0 to 0.03% boron,
- 0 to 0.07% carbon,
the remainder consisting of nickel and unavoidable impurities.

7. The superalloy as claimed in claim 3, wherein said superalloy comprises, in mass percentages:
- 5.6 to 6% aluminum,
- 5.2 to 6.2% cobalt,
- 15.4 to 16% chromium,
- 0.1 to 0.15% hafnium,
- 0.5 to 0.9% molybdenum,
- 2.5 to 2.9% tantalum,
- 0 to 1.5% titanium,
- 1.6 to 2% tungsten,
- 0 to 0.08% zirconium,
- 0 to 0.03% boron,
- 0 to 0.07% carbon,
the remainder consisting of nickel and unavoidable impurities.

8. The superalloy as claimed in claims 6 and 7, wherein said superalloy comprises, in mass percentages:
- 5.6 to 6% aluminum,
- 5.2 to 6.2% cobalt,
- 15.4 to 16% chromium,
- 0.1 to 0.15% hafnium,
- 0.5 to 0.9% molybdenum,
- 2.5 to 2.9% tantalum,
- 0 to 1.5% titanium,
- 1.6 to 2% tungsten,
- 0.04 to 0.08% zirconium,
- 0 to 0.03% boron,
- 0 to 0.07% carbon,
the remainder consisting of nickel and unavoidable impurities.

9. The superalloy as claimed in claims 4 and 7, wherein said superalloy comprises, in mass percentages:
- 5.6 to 6% aluminum,
- 5.2 to 6.2% cobalt,
- 15.4 to 16% chromium,
- 0.1 to 0.15% hafnium,
- 0.5 to 0.9% molybdenum,
- 2.5 to 2.9% tantalum,
- 0.5 to 1.5% titanium,
- 1.6 to 2% tungsten,
- 0 to 0.08% zirconium,
- 0 to 0.03% boron,
- 0 to 0.07% carbon,
the remainder consisting of nickel and unavoidable impurities.

10. The superalloy as claimed in claims 4 and 6, wherein said superalloy comprises, in mass percentages:
- 5.6 to 6% aluminum,
- 5.2 to 6.2% cobalt,
- 15.4 to 16% chromium,
- 0 to 0.15% hafnium,
- 0.5 to 0.9% molybdenum,
- 2.5 to 2.9% tantalum,
- 0.5 to 1.5% titanium,
- 1.6 to 2% tungsten,
- 0.04 to 0.08% zirconium,
- 0 to 0.03% boron,
- 0 to 0.07% carbon,
the remainder consisting of nickel and unavoidable impurities.

11. The superalloy as claimed in any one of claims 6 to 10, wherein said superalloy comprises, in mass percentages:
- 5.6 to 6% aluminum,
- 5.2 to 6.2% cobalt,
- 15.4 to 16% chromium,
- 0.1 to 0.15% hafnium,
- 0.5 to 0.9% molybdenum,
- 2.5 to 2.9% tantalum,
- 0.5 to 1.5% titanium,
- 1.6 to 2% tungsten,
- 0.04 to 0.08% zirconium,
- 0 to 0.03% boron,
- 0 to 0.07% carbon,
the remainder consisting of nickel and unavoidable impurities.

12. The superalloy as claimed in claim 11, wherein said superalloy comprises, in mass percentages:
- 5.6 to 6% aluminum,
- 5.2 to 6.2% cobalt,
- 15.4 to 16% chromium,
- 0.1 to 0.15% hafnium,
- 0.5 to 0.9% molybdenum,
- 2.5 to 2.9% tantalum,
- 1 to 1.5% titanium,
- 1.6 to 2% tungsten,
- 0.04 to 0.08% zirconium,
- 0 to 0.03% boron,
- 0 to 0.07% carbon,
the remainder consisting of nickel and unavoidable impurities.

13. A gas turbine part made of nickel-based superalloy as claimed in any one of claims 1 to 12.

14. A process for manufacturing a gas turbine part comprising the following steps:
- (S1): manufacture of a nickel-based superalloy powder as claimed in any one of claims 1 to 12;
- (S2): production of the part by forming the powder.

15. The process as claimed in claim 14, wherein said process comprises a resolution heat treatment step (S3) which is followed by a γ' phase precipitation heat treatment step (S4).
